# EUROPÄISCHE PATENTANMELDUNG

(11) **EP 4 501 114 A1**
(43) Veröffentlichungstag der Anmeldung: **05.02.2025**
(21) Anmeldenummer: 23189397.5
(22) Anmeldetag: 03.08.2023
(51) Int. Cl.: A21D 6/00

(54) **ANWENDUNG VON ATMOSPHÄRISCHER PLASMA-TECHNOLOGIE AUF MEHL**

(71) Anmelder: DIOSNA Dierks & Söhne GmbH, 49086 Osnabrück (DE)
(72) Erfinder: Die Erfindernennung liegt noch nicht vor
(74) Vertreter: Ege Lee & Roider Patentanwälte

(57) **Zusammenfassung**

Verfahren zur Vorbehandlung von Getreidemehl, umfassend den Schritt der Behandlung des Getreidemehls mit Plasma.

## Beschreibung

Die vorliegende Erfindung betrifft ein Verfahren zur Behandlung von Mehl.

Mehl durchläuft traditionell einen Reifungsprozess. Dieser wird durch Luftsauerstoff bewirkt.

Die Stabilität von Teigen verbessert sich durch mehrmonatige Lagerung des Weizens oder etwa 2-wöchige Lagerung des gemahlenen Mehls bis zu einem Maximum, das dann über einen längeren Zeitraum stabil ist.

Früher wurden diese Prozesse durch Oxidationsmittel wie Kaliumbromat oder Ammoniumpersulfat unterstützt. Wegen der potenziellen Giftigkeit dieser Substanzen wird heute praktisch nur noch Ascorbinsäure verwendet, wobei typischerweise 10 bis 100 g Ascorbinsäure pro Tonne Mehl zugesetzt werden.

Neben dem Zusatz von Ascorbinsäure sind auch enzymatische Mehlbehandlungen bekannt. Mehlbehandlung dient dabei nicht nur dazu, die Eigenschaften des Mehls zu vereinheitlichen, sondern auch dazu Mehl für die unterschiedlichen Anwendungen zu optimieren.

Trotz der vorhanden bekannten Verfahren besteht Bedarf nach alternativen Behandlungsverfahren, um die Eigenschaften von Mehl zu verändern.

Aufgabe der vorliegenden Erfindung war es, solche Verfahren bereitzustellen.

Gelöst wird die Aufgabe durch ein Verfahren zur Vorbehandlung von Getreidemehl, umfassend den Schritt der Behandlung des Getreidemehls mit Plasma.

Grundsätzlich kann das Verfahren sowohl mit Weizenmehl als auch mit Hafermehl, Roggenmehl, Dinkelmehl, oder Mischungen davon erfolgen, und zwar sowohl in klassischer als auch in der "Bio"-Variante.

Zur Plasmabehandlung wird bevorzugt atmosphärisches Plasma eingesetzt.

Als atmosphärisches Plasma oder Atmosphärendruckplasma wird ein Plasma bezeichnet, bei dem der Druck dem der umgebenden Atmosphäre, dem sogenannten Normaldruck, im Wesentlichen entspricht. Die Erzeugung of Atmosphärendruckplasma ist dem Fachmann bekannt. Es werden durch relativ geringe Stromdichten erzeugt und dient häufig zur Behandlung von Oberflächen (beispielsweise von Kunststoffoberflächen) oder zur Ozonerzeugung.

Typischerweise wird Atmosphärendruck in Form einer Plasmadüse verwendet, bei der mittels einer Hochspannungsentladung ein gepulster Lichtbogen erzeugt wird und ein Prozessgas, das durch die Düse strömt, angeregt und in den Plasmazustand überführt.

Vorteilhafterweise findet die Plasmabehandlung "inline" statt, d.h. bevorzugt auf einem Transportweg des Mehls.

Eine typische Behandlungsdauer beträgt 1 bis 10 min, bevorzugt 2 bis 5 min.

Grundsätzlich kann die Plasmabehandlung nach dem Mahlen, z.B. in der Mühle erfolgen. Gemäß einer bevorzugten Alternative findet das erfindungsmäße Verfahren nicht in der Mühle statt, sondern kurz vor der Teigherstellung. Dabei ist es besonders vorteilhaft, wenn die Plasmabehandlung praktisch unmittelbar vor dem Einbringen des Mehls in den Teig erfolgt, d.h. 0 bis 60 min, bevor das Mehl zur Teigherstellung verwendet wird.

Erfindungsgemäß führt die Vorbehandlung insbesondere zu einer Verbesserung der Knetstabilität.

Gegenstand der Erfindung ist auch ein Verfahren zur Herstellung eines Teiges, umfassend die Schritte
(a) Vorbehandlung von Getreidemehl gemäß dem erfindungsgemäßen Verfahren
(b) Verarbeiten des vorbehandelten Getreidemehls zu einem Teig.

In einer bevorzugten Ausführungsform vergeht zwischen Schritt (a) und Schritt (b) ein Zeitraum von 0 bis 60 min.

Gegenstand der Erfindung ist weiterhin das vorbehandelte Getreidemehl, das durch das erfindungsgemäße Verfahren zur Vorbehandlung von Getreidemehl erhältlich ist, sowie ein Teig, der durch das erfindungsgemäße Verfahren zur Herstellung eines Teiges erhältlich ist.

Durch die erfindungsgemäße Behandlung ergaben sich folgende Auswirkungen (siehe Beispiele):
- das Mehl wurde geringfügig feuchter bei sinkender Aw Aktivität
- die Behandlung stärkt den Kleber
- die Behandlung hat Einfluss auf den Dehnwiderstand und erhöht leicht die Dehnbarkeit
- das Verfahren erhöht die Knetstabilität und minimiert geringfügig die Teigerweichung
- es verändert sich das Quellverhalten
- das Gebäckvolumen wird erhöht
- es erhöht den Weißanteil in der Brotkrumen Farbe und erniedrigt den Gelbwert sowohl im Mehl als auch in der Brotkrumenfarbe.
- die Brotkrume erweicht, ohne die Elastizität zu verändern
- es gibt einen Einfluss auf gewisse Mikroorganismen.

Die Erfindung wird durch die nachfolgenden Beispiele näher erläutert.

### Beispiel 1

### Mehlfeuchtebestimmung

Die Mehlfeuchtebestimmung erfolgte dreifach nach der Methode ICC Nr. 110/1

**Tabelle 1: Mehlfeuchte**

| **Versuch** | Versuchs Nr. 6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert** | **14,0** | **14,5** | **14,5** | **14,5** |
| **%-Abw. zu 0-P** | | ***3,6*** | ***3,6*** | ***3,6*** |
| **Auffälligkeit** | | ***X*** | ***X*** | ***X*** |

Interpretation: Die Mehlfeuchte kann durch die Plasmabehandlung geringfügig erhöht werden.

### Beispiel 2

### aW-Wert-Bestimmung

Der aW-Wert, also die Wasseraktivität wurde mittels Sorptionsisotherme zweifach bestimmt.

**Tabelle 2: aW-Wert**

| **Versuch** | Versuchs Nr. 6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert** | **0,650** | **0,645** | **0,623** | **0,609** |
| **%-Abw. zu 0-P** | | **-0,8** | **-4,2** | **-6,3** |
| **Auffälligkeit** | | | ***X*** | ***X*** |

Interpretation: Obwohl die Mehlfeuchte nach ICC-Methode leicht zunimmt (Beispiel 1), sinkt der aW-Wert. Durch die Behandlung wird - vermutlich in der Stärke - Feuchtigkeit gebunden, daher nimmt der aW Wert ab.

### Beispiel 3

### Mehlfeuchte mittels Nah-Infrarotspektroskopie

Die Mehlfeuchte wurde ebenfalls per Nah-Infrarotspektroskopie dreifach untersucht.

**Tabelle 3: Mehlfeuchte (NIR)**

| **Versuch** | Versuchs Nr. 6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert** | **14,4** | **14,3** | **14,3** | **14,3** |
| **%-Abw. zu 0-P** | | **-0,7** | **-0,7** | **-0,7** |
| **Auffälligkeit** | | | | |

Interpretation: Die Mehlfeuchtebestimmung im NIR zeigt keine Veränderung, anders als nach Methode ICC Nr. 110/1. Da im NIR die Probe stärker erhitzt wird, ist NIR offenbar für Modifizierungen mit Plasma zu unspezifisch. Gestützt wird diese Annahme dadurch, dass in Mühlen das NIR nur als Schnellbestimmer genutzt wird, nicht zur Fein-Spezifizierung.

### Beispiel 4

### Gluten-Index

Der Gluten-Index wurde mittels der Methode ICC Nr. 155 dreifach bestimmt.

**Tabelle 4: Gluten Index**

| **Versuch** | Versuchs Nr. 6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert** | **89** | **90** | **91** | **97** |
| **%-Abw. Zu 0-P** | | **0,3** | **1,7** | **8,7** |
| **Auffälligkeit** | | | | ***X*** |

Interpretation: Der Kleber wird geringfügig gestärkt.

### Beispiel 5

### Feuchtkleber

Es wurde der Feuchtkleber gemäß Methode ICC Nr. 155 dreifach bestimmt.

**Tabelle 5: Feuchtkleber**

| **Versuch** | Versuchs Nr. 6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert [%]** | **23,9** | **23,8** | **24,3** | **22,1** |
| **%-Abw. zu 0-P** | | **-0,2** | **1,7** | **-7,5** |
| **Auffälligkeit** | | | | ***X*** |

Interpretation: Die zuvor beschriebene Stärkung des Klebers führt bei dreiminütiger Plasmabehandlung dazu, dass ein größerer Anteil Kleber ausgewaschen wird. Eine längere Behandlung (5 min) kann das Glutennetzwerk offenbar wieder öffnen, so dass beim Auswaschen des Klebers lösliche Proteine durch die Siebmaschen des Geräts austreten können.

### Beispiel 6

### Klebereigenschaften

Die Klebereigenschaften wurden mittels eines Glutenballs zweifach bestimmt. Der Glutenball wurde zehnfach gewirkt (der Glutenball in 10 Schritten/Bewegungen ausgerundet) und eine Stunde in 2%-iger Natriumchloridlösung gelagert (Glutomatic Test ICC Standard 137/1).

**Tabelle 6: Klebereigenschaften**

| **Versuch** | Versuchs Nr. 6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert** | normal - kurz | lang - weich | lang - sehr weich | lang - sehr weich |
| **%-Abw. zu 0-P** | | | | |
| **Auffälligkeit** | | ***X*** | ***X*** | ***X*** |

Interpretation: Die Dehnbarkeit des Klebers wird mit zunehmender Behandlung erhöht.

### Beispiel 7

### Farinogramm Wasseraufnahme

Es wurde die Wasseraufnahme mit der Methode Nr. 115/1 zweifach bestimmt.

**Tabelle 7: Farinogramm Wasseraufnahme**

| **Versuch** | Versuchs Nr. 6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert [%]** | **60,5** | **60,5** | **60,4** | **60,4** |
| **%-Abw. zu 0-P** | | **0,0** | **-0,2** | **-0,2** |
| **Auffälligkeit** | | | | |

Interpretation: Im Kneter des Farinographen konnte keine erhöhte Wasseraufnahme bei der Teigbildung ermittelt werden.

### Beispiel 8

### Farinogramm Stabilität

Es wurde die Stabilität gemäß Farinogramm ICC Methode Nr. 115/1 zweifach bestimmt.

**Tabelle 8: Farinogramm Stabilität**

| **Versuch** | Versuchs Nr.6 | Versuchs Nr. 7 | Versuchs Nr. 8 | Versuchs Nr. 9 |
|---|---|---|---|---|
| **Bezeichnung** | Nullprobe Plasma | behandelt Plasma 1 min | behandelt Plasma 3 min | behandelt Plasma 5 min |
| **Wert [min]** | **7,13** | **6,96** | **7,6** | **8,26** |
| **%-Abw. zu 0-P** | | **-2,4** | **6,6** | **15,8** |
| **Auffälligkeit** | | | ***x*** | ***x*** |

Interpretation: Die Knetstabilität erhöht sich mit zunehmender Plasmabehandlung. Das bestätigt die Stärkung des Klebers gemäß Beispiel 4. Die verstärkte Dehnbarkeit (Beispiel 6) bei starkem Kleber führt dann offenbar zu einer verbesserten Widerstandsfähigkeit beim Kneten. Die Auswaschung löslicher Proteine bei längerer Plasmabehandlung wirkt sich im geschlossenen System eines Kneters nicht negativ, sondern stabilisierend aus.

### Beispiel 9

### Farinogramm Teigerweichung (12 min)

Es wurde die Teigerweichung nach ICC Nr. 115/1 zweifach bestimmt.

**Tabelle 9: Farinogramm Teigerweichung**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [FE]** | **53** | **55** | **52** | **49** |
| **%-Abw. Zu 0-P** | | **3,8** | **-1,9** | **-7,5** |
| **Auffälligkeit** | | | | ***X*** |

Interpretation: Die Teigerweichung wird verringert, was die Ergebnisse zur Kleberstärkung und erhöhter Stabilität unterstützt.

### Beispiel 10

### Kieffer Rig Dehnwiderstand

Es wurde der Kieffer Rig Dehnwiderstand bestimmt. Dazu erfolgte eine einminütige Knetung mit einer Perten Glutomatic 3 min. **[?]** + 2X10 min: TR **[?]**. Die Bestimmung erfolgte 2-fach.

**Tabelle 10**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [g]** | **24,6** | **26,3** | **36,0** | **24,3** |
| **%-Abw. zu 0-P** | | **6,9** | **46,4** | **-1,3** |
| **Auffälligkeit** | | | ***X*** | |

Interpretation: Der Dehnwiderstand hat sein Optimum bei 3 min Plasmabehandlung. Längere Behandlung vermindert den Widerstand.

### Beispiel 11

### Kieffer Rig Dehnbarkeit

Dazu erfolgte eine einminütige Knetung mit einer Perten Glutomatic 3 min. **[?]** + 2X10 min: TR **[?]**. Die Bestimmung erfolgte 2-fach.

**Tabelle 11**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [mm]** | **48,4** | **45,3** | **32,2** | **45,8** |
| **%-Abw. Zu 0-P** | | **-6,5** | **-33,5** | **-5,4** |
| **Auffälligkeit** | | | ***X*** | |

Interpretation: Die verringerte Dehnbarkeit bei 3 min, und die verstärkte Dehnbarkeit bei 5 min bestätigt die Resultate beim Dehnwiderstand (Beispiel 10).

Beide Resultate weisen darauf hin, dass im Backversuch höhere Gebäckvolumina erzielt werden müssten. Aufgrund dieser Daten scheint eine dreiminütige Plasmabehandlung optimal.

### Beispiel 12

### Kieffer Rig Verhältniszahl

Es wurde die Kieffer Rig Verhältniszahl bestimmt. Dazu erfolgte eine einminütige Knetung mit eine Perten Glutomatic 3 min. **[?]** + 2X10 min: TR **[?]**. Die Bestimmung erfolgte 2-fach.

**Tabelle 12**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [g/mm]** | **0,5** | **0,6** | **1,1** | **0,5** |
| **%-Abw. zu 0-P** | | **12,7** | **118,7** | **3,3** |
| **Auffälligkeit** | | | ***X*** | |

Interpretation: Der rechnerische Wert der Verhältniszahl bestätigt den Schluss zum Gebäckvolumen bei Beispiel 11.

### Beispiel 13

### Quellkurve

Es erfolgte die Bestimmung der Quellkurve nach DREWS. Die Bestimmung erfolgte 2-fach.

**Tabelle 13**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [cp/sec]** | 0,3 | 1,5 | 1,6 | 1,0 |
| **%-Abw. zu 0-P** | | | | |
| **Auffälligkeit** | | ***X*** | ***X*** | ***X*** |

Interpretation: Die Quellkurve weist ebenfalls darauf hin, dass eine dreiminütige Plasmabehandlung optimal war.

### Beispiel 14

Es erfolgte die Bestimmung der Fallzahl gemäß ICC Nr. 107/1. Die Bestimmung erfolgte 3-fach.

**Tabelle 14**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [sec]** | **463** | **468** | **458** | **469** |
| **%-Abw. zu 0-P** | | **1,2** | **-1,1** | **1,3** |
| **Auffälligkeit** | | | | |

Interpretation: Die geringere Fallzahl bei 3 Minuten deutet auf eine mögliche Anregung von Enzymen hin. Allerdings ist der gemessene Unterschied so gering, dass es auch eine normale Mess-Abweichung sein kann.

### Beispiel 15

### Stärkebeschädigung

Die Stärkebeschädigung wurde gemäß ICC Nr. 126/1 2-fach bestimmt. Die Bestimmung erfolgte 2-fach.

**Tabelle 15**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [%]** | **6,6** | **6,6** | **6,8** | **6,7** |
| **%-Abw. Zu 0-P** | | **-0,4** | **2,3** | **1,8** |
| **Auffälligkeit** | | | | |

Interpretation: Die geringen Unterschiede sind als Mess-Abweichungen zu interpretieren. Die Ergebnisse deuten somit darauf hin, dass Stärke nicht geschädigt wird.

### Beispiel 16

### Brotfarbe L - Weißheit

Es wurde die Brotfarbe L - Weißheit untersucht. Als Methode diente die Minolta Farbmessung L,a,b. nach CIE. Die Bestimmung erfolgte 3-fach.

**Tabelle 16**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert []** | **79,7** | **80,2** | **84,3** | **84,8** |
| **%-Abw. zu 0-P** | | **0,6** | **5,8** | **6,3** |
| **Auffälligkeit** | | ***X*** | ***X*** | ***X*** |

Interpretation: Der Weißanteil in der Krumenfarbe erhöht sich durch die Behandlung mit Plasma.

### Beispiel 17

### Brotfarbe b - Gelbwert

Es wurde die Brotfarbe b- Gelbwert untersucht. Als Methode diente die Minolta Farbmessung L,a,b. nach CIE. Die Bestimmung erfolgte 3-fach.

**Tabelle 17**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert []** | **17,4** | **16,8** | **17,1** | **16,6** |
| **%-Abw. Zu 0-P** | | **-3,4** | **-1,5** | **-4,3** |
| **Auffälligkeit** | | ***X*** | | ***X*** |

Interpretation: Der Gelbwert in der Brotkrumenfarbe wird durch Plasmabehandlung verringert.

### Beispiel 18

### Frischhaltung

Es wurde die Frischhaltung von Backwaren untersucht. Als Methode diente die Texture Analyser AACC Bread Firmness. Die Bestimmung erfolgt in 5 parallelen Experimenten.

**Tabelle 18**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [g]** | **708,5** | **593,3** | **681,4** | **607,5** |
| **%-Abw. zu 0-P** | | **-16,3** | **-3,8** | **-14,3** |
| **Auffälligkeit** | | ***X*** | | ***X*** |

Interpretation: Die Kraft, die erforderlich ist, eine Brotprobe zu komprimieren, verringert sich. Es wird eine stärkere Weichheit erzielt, die der Verbraucher als verbesserte Frischhaltung empfindet.

### Beispiel 19

### Frischhaltung Elastizität

Es wurde die Frischhaltung der Elastizität von Backwaren untersucht. Als Methode diente die Texture Analyser AACC Bread Firmness. Die Bestimmung erfolgt in 5 parallelen Experimenten.

**Tabelle 19**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [g]** | **97,7** | **97,5** | **97,8** | **98,0** |
| **%-Abw. Zu 0-P** | | **-0,2** | **0,1** | **0,3** |
| **Auffälligkeit** | | | | |

Interpretation: Die Elastizität der Brote bleibt erhalten.

### Beispiel 20

### Sensorik

**Tabelle 20**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Geruch** | einwandfrei | einwandfrei | einwandfrei | einwandfrei |
| **Geschmack** | einwandfrei | einwandfrei | einwandfrei | einwandfrei |
| **Auffälligkeit** | | | | |

Interpretation: Die Sensorik aller Produkte war einwandfrei.

### Beispiel 21

### Mikrobiologie

Bei der Bei der Untersuchung der Gesamtkeimzahl, Lactobacillus, Schimmelpilzen und Hefen ergaben sich keine signifikanten Unterschiede.

E. Coli, Salmonellen, Staphylokokkus und Bacillus cereus waren nicht nachweisbar.

Bei Enterobacteriaceae ergab sich folgendes:

**Tabelle 21**

| **Versuch** | Versuchs Nr.6 | Versuchs Nr.7 | Versuchs Nr.8 | Versuchs Nr.9 |
|---|---|---|---|---|
| **Bezeichnung** | Nullprobe Plasma | behandelt Plasma 1min | behandelt Plasma 3min | behandelt Plasma 5min |
| **Wert [g]** | ***1,00E*+*03*** | ***5,00E*+*02*** | ***7,50E*+*02*** | ***1,00E*+*02*** |
| **Abw. zu 0-P** | | **-0,5E+01** | **-0,25E+01** | **-1,15E+01** |
| **Auffälligkeit** | | | | ***X*** |

Interpretation: Die Nachweisbarkeit von im Mehl typischerweise vorhandenen Enterobacteriaceae vermindert sich um eine halbe bis ganze Zehnerpotenz. Dies kann als positiver Einfluss der Plasmabehandlung bewertet werden. Es sei festgehalten, dass solche Messungen jeweils anhand der in den Backbetrieben verwendeten Mehle spezifiziert und verifiziert werden müssen.

## Patentansprüche

1. Verfahren zur Vorbehandlung von Getreidemehl, umfassend den Schritt der Behandlung des Getreidemehls mit Plasma.

2. Verfahren nach Anspruch 1, wobei das Getreidemehl aus Weizenmehl, Hafermehl, Roggenmehl, Dinkelmehl oder Mischungen davon ausgewählt wird.

3. Verfahren nach Anspruch 1 oder 2, wobei das Plasma atmosphärisches Plasma ist.

4. Verfahren nach einem der vorherigen Ansprüche, wobei die Behandlung mit Plasma für 1 bis 10 Minuten erfolgt.

5. Verfahren nach einem der vorherigen Ansprüche, wobei die Behandlung 0 bis 60 Minuten erfolgt, bevor das Mehl zur Teigherstellung verwendet wird.

6. Verwendung einer Plasmabehandlung zur Vorbehandlung von Getreidemehl um die Knetstabilität eines aus dem Mehl erhaltenen Teiges zu verbessern.

7. Verfahren zur Herstellung eines Teiges, umfassend die Schritte
(a) Vorbehandlung von Getreidemehl gemäß dem Verfahren der Ansprüche 1 bis 5
(b) Verarbeiten des vorbehandelten Getreidemehls zu einem Teig.

8. Verfahren nach Anspruch 7, wobei zwischen Schritt (a) und Schritt (b) ein Zeitraum von 0 bis 60 min vergeht.

9. Vorbehandeltes Getreidemehl, erhältlich durch das Verfahren nach einem der Ansprüche 1 bis 5.

10. Teig, erhältlich durch das Verfahren nach einem der Ansprüche 7 bis 8.
